# EUROPEAN PATENT SPECIFICATION

(11) **EP 1 022 435 B1**
(45) Date of publication and mention of the grant of the patent: **03.06.2009**
(21) Application number: 99310362.1
(22) Date of filing: 21.12.1999
(51) Int. Cl.: F01D 5/18

(54) **Internal cooling circuit for a gas turbine bucket**
Interner Kühlkreislauf für eine Gasturbinenschaufel
Circuit de refroidissement interne pour une aube de turbine à gaz

(30) Priority: 25.01.1999 US 236714
(43) Date of publication of application: 26.07.2000
(73) Proprietor: GENERAL ELECTRIC COMPANY, Schenectady, NY 12345 (US)
(72) Inventor: Hyde, Susan Marie, Schenectady, New York 12309 (US); Davis, Richard Mallory, Scotia, New York 12303 (US)
(74) Representative: Illingworth-Law, William Illingworth

(56) References cited:
- WO-A-98/34013
- WO-A-98/55735
- DE-A- 19 810 066
- DE-A- 19 814 680
- US-A- 4 604 031
- US-A- 5 462 405
- US-A- 5 536 143
- PATENT ABSTRACTS OF JAPAN vol. 1997, no. 12, 25 December 1997 (1997-12-25) & JP 09 203301 A (MITSUBISHI HEAVY IND LTD), 5 August 1997 (1997-08-05)

## Description

This invention relates to an internal cooling circuit for a stage two bucket in a gas turbine according to the preamble of claim 1. Such a gas turbine bucket has been disclosed for example in document US 5,536,143.

High gas path temperatures are required to achieve high output and high efficiency in gas turbine machines. Several rows (or stages) of rotating blades or buckets, made from various high temperature alloys, are used in the gas turbine to extract energy from the hot gas path. To maintain temperatures of the first and second stage buckets within the material design limits, internal cooling is required. For the high gas path temperatures expected in advanced gas turbine engines, cooling air is not attractive due to the high cycle efficiency penalties associated with using compressor discharge air. Steam is attractive as a viable alternative cooling medium due to its high heat capacity and its availability in a combined cycle unit which includes both steam and gas turbines. This invention addresses the design of an internal cooling circuit for a closed circuit, steam cooled, stage two bucket in a gas turbine engine.

DE-A-198 10 066 discloses a gas turbine rotating blade with a serpentine passage.

The present invention provides a gas turbine bucket as defined in claim 1. ,

The internal cooling circuit for a stage two bucket in accordance with an embodiment of this invention incorporates a closed loop serpentine passage in the airfoil portion of the bucket, with multiple 180° turns, and connected to inlet and outlet passages in the radially inner dovetail portion of the bucket. The cooling passages are used to direct the cooling medium (steam in the preferred embodiments), around the bucket, removing heat from the bucket walls. The serpentine path includes alternating radially inward and outward passages, extending from the root of the bucket to the tip, turning and then extending from the tip back to the root. Multiple turns may be employed in the serpentine path, depending on turbine size, temperature requirements, etc.

The invention thus provides in a gas turbine bucket having a shank portion and an airfoil portion having leading and trailing edges and pressure and suction sides, an internal cooling circuit, the internal cooling circuit having a serpentine configuration including plural radial outflow passages and plural radial inflow passages, and wherein a coolant inlet passage communicates with a first of the radial outflow passages along the trailing edge, the first of the radial outflow passages having a plurality of radially extending and radially spaced elongated rib segments extending between and connecting the pressure and suction sides in a middle region of the first radial outflow passage to prevent ballooning of the pressure and suction sides at the first radial outflow passages. In addition, a turn guide vane is used in the radially outer or tip trailing edge passage to direct flow toward the tip trailing edge corner region. The passage aspect ratios (length to width cross-section dimensions of the various passages) are designed to minimize Buoyancy Numbers in outward flowing passages, thereby maximizing the heat transfer enhancements due to rotation. A discussion of suitable aspect ratios and Buoyancy Numbers can be found in commonly owned U.S. Patent No. 5,536,143.

In a preferred embodiment of the invention, turbulators are used to enhance heat transfer from the bucket walls to the the trailing edge passage. In another aspect, the gas turbine bucket having a shank portion and an airfoil portion having leading and trailing edges and pressure and suction sides, an internal cooling circuit, the internal cooling circuit having a serpentine configuration including plural radial outflow passages and plural radial inflow passages, and wherein a coolant inlet passage communicates with a first of the radial outflow passages along the trailing edge, the internal cooling circuit including turbulator ribs in each of the plurality of radial outflow and radial inflow passages extending at an acute angle to a direction of coolant flow in all but a radial inflow passage along the leading edge.

Advantages of the closed circuit serpentine design, with turbulators and tip turn guide vanes, include improved heat transfer from the buckets to the steam by using a high capacity cooling medium, i.e., the steam, as well as improved overall turbine cycle efficiency over conventional air cooled buckets since steam is extracted from the top cycle of the steam turbine, used to cool the bucket and is then returned to the bottom cycle of the steam turbine in a closed loop. This results in improved overall turbine cycle efficiency over conventional-arrangements where compressor discharge air is used for cooling, and then discharged into the hot gas path.

The invention will now be described in greater detail, by way of example, with reference to the accompanying drawings, in which:
Figure 1 is a plan view of a second stage bucket in accordance with a preferred embodiment of the invention;
Figure 2 is a section view taken along the line 2-2 in Figure 1, but with an airfoil tip cap in place;
Figure 3 is a section taken along the line 3-3 of Figure 2;
Figure 4 is an enlarged detail illustrating turbulators on opposite side walls of a cooling passage in the stage 2 bucket in accordance with the preferred embodiment of this invention;
Figure 5 is a partial section of a turbulator profile in accordance with the preferred embodiment of the invention; and
Figure 6 is a partial side elevation of a lower portion of the bucket shown in Figure 1, illustrating the coolant inlet and outlets

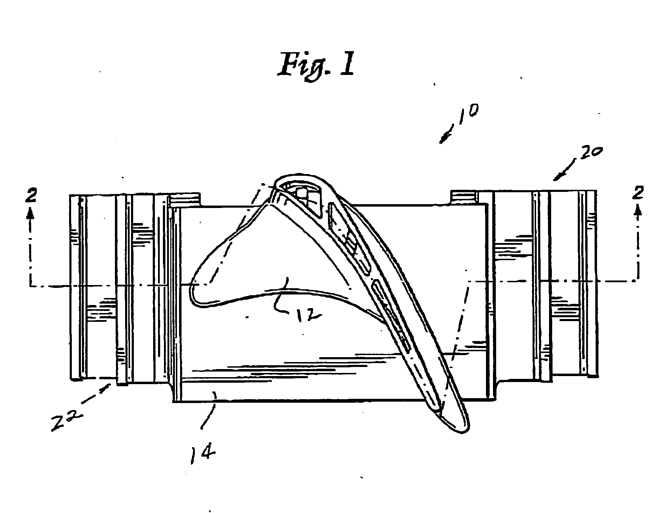

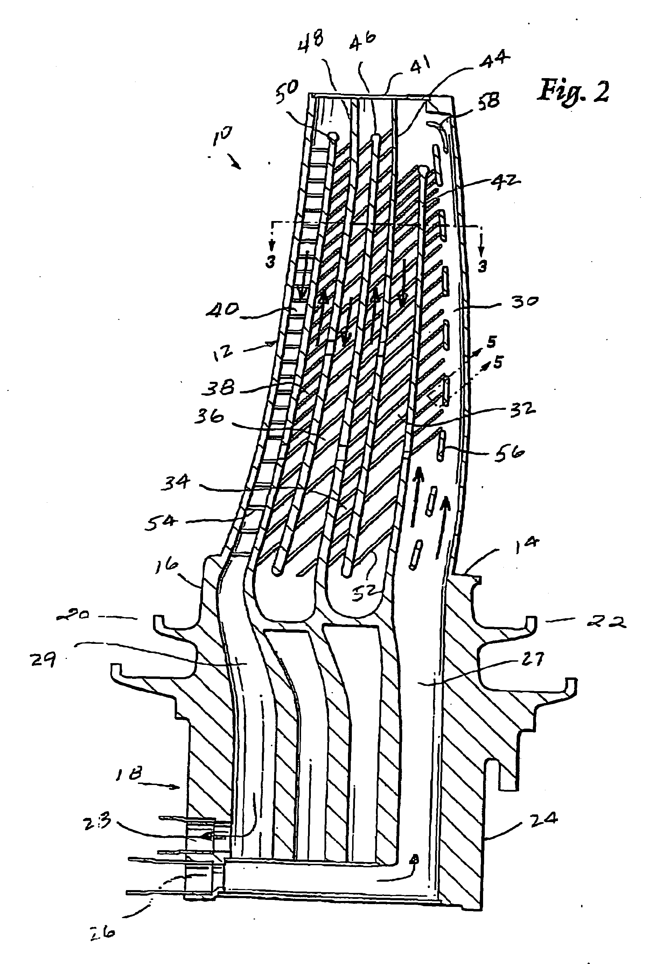

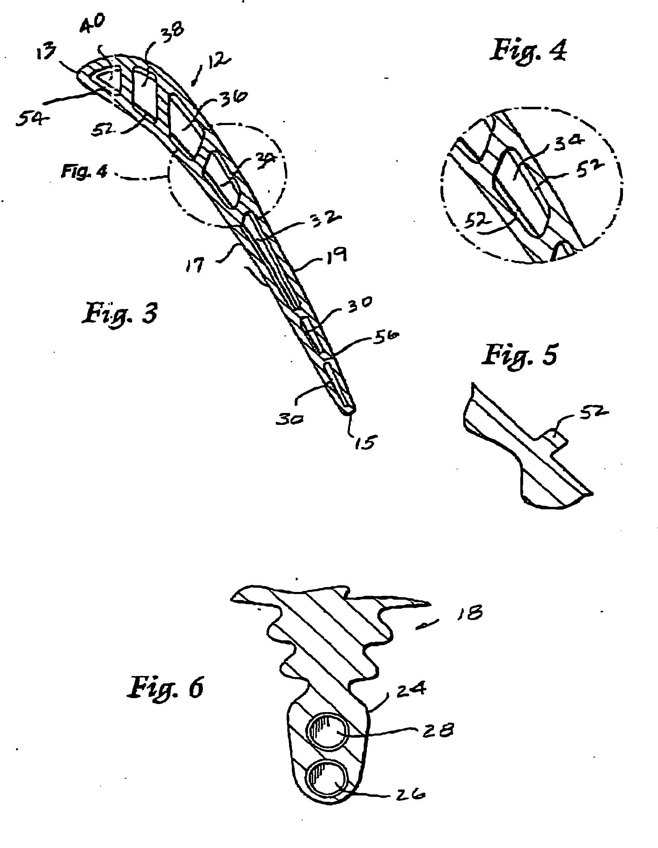

Referring to Figures 1 and 2, a second stage bucket 10 in accordance with a preferred embodiment of this invention includes an airfoil portion 12 attached to a platform portion 14 which seals the shank 16 of the bucket from the hot gases in the combustion flow path. The shank 16 is attached to a rotor disk by a conventional dovetail 18. Angel wing seals 20, 22 provide sealing of the wheel space cavities. With reference also to Figure 6, the dovetail 18 includes an extension 24 below the dovetail which serves to supply and remove cooling steam from the bucket via axially arranged passages 26 and 28 which communicate with axially oriented rotor passages (not shown). The airfoil portion 12 has leading and trailing edges 13, 15, respectively, and pressure and suction sides 17, 19, respectively.

With specific reference now to Figure 2, the internal cooling passages in the second stage bucket define a closed serpentine circuit having a total of six radially extending passages 30, 32, 34, 36, 38 and 40, with alternating radially inward and radially outward passages extending from the primary radial supply passage 27 at root of the bucket to the tip, turning 180° and then extending from the tip and ultimately back to the root to the primary return passage 29. Note that Figure 2 also shows a tip cap 41 which seals the radially outer end of the airfoil portion 12.

In the illustrated embodiment, there are three radially outer tip turns and two radially inner root turns, forming the six passages, three (30, 34 and 38) in the radially outward direction and three (32, 36 and 40) in the radially inward direction. The various passages are separated by five radially extending ribs or interior partitions 42, 44, 46, 48 and 50 which form the tip and root turns. These ribs extend the full width of the airfoil portion, i.e., from the suction side of the airfoil to the pressure side. As shown, steam flows initially upwardly or radially outwardly through the trailing edge passage 30 first, and radially downwardly or inwardly through the leading edge passage 40 last. The steam is input at the trailing edge cooling passage 30, via passages 26, 27, first, since the trailing edge of the bucket is typically the most difficult region to cool.

Turbulators 52 are used in passages 32-38 to enhance heat transfer from the bucket walls to the cooling medium. These turbulators extend outwardly from opposite walls of the passage as best seen in Figures 3, 4 and 5. The turbulators extend only into the cooling passage, not so far as to restrict coolant flow, but far enough to enhance heat transfer from the bucket walls to the cooling medium. In the preferred arrangement, the turbulators 52 are arranged at 45° angles to the direction of flow. Turbulators may be staggered in the radial direction (i.e., so that no turbulators are directly opposite each other) or they may be in lateral alignment (i.e., directly opposite each other) it desired.

In passage 40, turbulators 54 are arranged at a 90° angle to the direction of cooling flow, providing superior heat transfer in the leading edge passage compared to staggered, overlapping turbulators 52 in the remaining passages. Turbulators 54 also "wrap around" the interior leading edge wall as best seen in Figure 3. Passage 30, extending along the trailing edge of the bucket or blade has a large aspect ratio and requires segmented ribs 56 extending between opposite walls of the bucket in order to prevent ballooning of the walls of the bucket while still allowing free distribution of the steam from the forward part of the passage into the apex trailing edge of the passage.

In addition, a turn guide vane 58 is located at the radially outermost portion of the trailing edge passage 30. This curved guide vane is located to provide a split of the cooling medium around the tip turn between passages 30 and 32 so as to direct needed coolant flow into the trailing edge tip corner region. The crescent shaped guide vane 58 has been found to provide the best flow split with minimum flow losses. Note that the guide vane extends completely between the opposite side walls of the bucket, thereby completely splitting the cooling flow on either side of the vane. This guide vane 58 is a cast-in feature (as are the turbulators 52, 54) included in the ceramic core used to define the internal cooling passages of the bucket in the conventional investment casting process. Turbulator placement, size, height to width ratio, pitch, orientation and corner radii are all selected to provide for the most efficient heat transfer from the bucket walls to the cooling medium.

## Claims

1. A gas turbine bucket (10) having a shank portion (16) and an airfoil portion (12) having leading and trailing edges(13, 15) and pressure and suction sides (17, 19), an internal cooling circuit, the internal cooling circuit having a serpentine configuration including plural radial outflow passages (30, 34, 38) and plural radial inflow passages (32, 36, 40), and wherein a cooling inlet passage (26) communicates with a first of said radial outflow passages (30) along said trailing edge (15), said first of said radial outflow passages (30) having a plurality of radially extending and, radially spaced elongated rib segments (56) extending between and connecting said pressure and suction sides (17, 19) in a middle region of said first radial outflow passage (30) to prevent ballooning of said pressure and suction sides (17, 19) at said first radial outflow passage (30) and to split coolant flow in said first radial outflow passage (30); **characterised in that** said first of said radial outflow passages (30) further includes a turning vane (58) in a radially outermost tip portion of said first radial outflow passage (30) upstream of a first of said radial inflow passages (32) and at a location between the rib segment (56) farthest from said inlet cooling passage(26) and the trailing edge (15) to thereby further split the coolant flow in the radially outer tip portion between said radial inflow and outflow passages (30, 32) and to direct coolant flow into a tip corner region of said trailing edge (15), prior to flow into said first of said radial inflow passages (32), said turning vane (58) extending between and connected to said pressure and suction sides (17, 19).

2. The gas turbine bucket of claim 1 wherein the internal cooling circuit includes turbulator ribs (52, 54) in each of said plurality of radial outflow (30, 34, 38) and radial inflow (32, 36, 40) passages.

3. The gas turbine bucket of claim 2 wherein said turbulator ribs (52) extend at an acute angle to the direction of coolant flow in all but one of said radial outflow and radial inflow passages (30, 32, 34, 36, 38, 40).

4. The gas turbine bucket of claim 3 wherein said one of said radial outflow (30, 34, 38) and radial inflow (32, 36, 40) passages comprises a radial inflow passage along said leading edge (13).

5. The gas turbine bucket of claims 2, 3, or 4, wherein the turbulator ribs (54) in said radial flow passage (40) along said leading edge (13) extend substantially perpendicular to said direction of coolant flow.

6. The gas turbine bucket of claims 2, 3, or 4 wherein the turbulators (52, 54) extend from one of said pressure and suction sides (17, 19) and extend only partly into respective radial inflow and outflow passages (30, 32, 34, 36, 36, 40).

## Patentansprüche

1. Gasturbinenschaufel (10) mit einem Schaftabschnitt (16) und einem Schaufelblattabschnitt (12) mit Vorder- und Hinterkanten (13, 15) und Druck- und Saugseiten (17, 19), einem internen Kühlkanal, wobei der interne Kühlkanal eine serpentinenartige Konfiguration mit mehreren radialen Ausströmkanälen (30, 34, 38) und mehreren radialen Einströmkanälen (32, 36, 40) besitzt, und wobei ein Kühleinlasskanal (26) mit einem ersten von den radialen Ausströmkanälen (30) entlang der Hinterkante (15) in Verbindung steht, wobei der erste von den radialen Ausströmkanälen (30) mehrere sich radial erstreckende und radial in Abstand angeordnete längliche Rippensegmente (56) hat, die sich zwischen den Druck- und Saugseiten (17, 19) in einem mittleren Bereich des ersten radialen Ausströmkanals (30) erstrecken und diese verbinden, um eine Ausbauchung der Druck- und Saugseiten (17, 19) bei dem ersten radialen Ausströmkanal (30) zu verhindern, und um einen Kühlmittelstrom in dem ersten radialen Ausströmkanal (30) zu teilen; **dadurch gekennzeichnet, dass** der erste von den radialen Ausströmkanälen (30) ferner eine Umlenkeinrichtung (58) in einem radial äußersten Spitzenabschnitt des ersten radialen Ausströmkanals (30) stromaufwärts von einem ersten von den radialen Einströmkanälen (32) und an einer Stelle zwischen dem Rippensegment (56) am weitesten von dem Einlasskühlkanal (26) und der Hinterkante (15) weg enthält, um **dadurch** den Kühlmittelstrom in dem radial äußersten Spitzenabschnitt weiter zwischen den radialen Einström- und Ausströmkanälen (30, 32) aufzuteilen und einen Kühlmittelstrom in einen Spitzeneckenbereich der Hinterkante (15) zu leiten, bevor er in den ersten von den radialen Einströmkanälen (32) strömt, wobei die Umlenkeinrichtung (58) sich zwischen den Druck- und Saugseiten (17, 19) erstreckt und damit verbunden ist.

2. Gasturbinenschaufel nach Anspruch 1, wobei der interne Kühlkanal in jedem von den mehreren radialen Ausström-(30, 34, 38)- und radialen Einström- (32, 36, 34)-Kanälen Verwirblerrippen (52, 54) enthält.

3. Gasturbinenschaufel nach Anspruch 2, wobei sich die Verwirblerrippen (52) in einem spitzen Winkel zur Richtung des Kühlmittelstroms in allen bis auf einen von den radialen Ausström- und radialen Einströmkanälen (30, 32, 34, 36, 38, 40) erstrecken.

4. Gasturbinenschaufel nach Anspruch 3, wobei der eine von den radialen Ausström-(30, 34, 38)- und radialen Einström-(32, 36, 34)-Kanälen einen radialen Einströmkanal entlang der Vorderkante (13) aufweist.

5. Gasturbinenschaufel nach Anspruch 2, 3 oder 4, wobei sich die Verwirblerrippen (54) in dem radialen Strömungskanal (40) entlang der Vorderkante (13) im Wesentlichen senkrecht zu der Richtung eines Kühlmittelstroms erstrecken.

6. Gasturbinenschaufel nach Anspruch 2, 3 oder 4, wobei sich die Verwirbler (52, 54) von einer der Druck- und Saugseiten (17, 19) aus erstrecken und sich nur teilweise in entsprechende radiale Einström- und Ausströmkanäle (30, 32, 34, 36, 38, 40) erstrecken.

## Revendications

1. Aube (10) de turbine à gaz munie d'une partie (16) de tige et d'une partie (12) à profil aérodynamique comportant des bords (13, 15) d'attaque et de fuite et des côtés (17, 19) de pression et d'aspiration, un circuit de refroidissement interne, le circuit de refroidissement interne présentant une configuration en serpentin comprenant plusieurs passages (30, 34, 38) d'écoulement radial sortant et plusieurs passages (32, 36, 40) d'écoulement radial entrant, et dans laquelle un passage (26) d'entrée de liquide de refroidissement communique avec un premier desdits passages (30) d'écoulement radial sortant le long dudit bord (15) de fuite, ledit premier desdits passages (30) d'écoulement radial sortant étant muni d'une pluralité de segments (56) de nervures allongées s'étendant radialement et radialement espacés, s'étendant entre et reliant lesdits côtés (17, 19) de pression et d'aspiration dans une région médiane dudit premier passage (30) d'écoulement radial sortant pour empêcher le ballonnement desdits côtés (17, 19) de pression et d'aspiration au niveau dudit premier passage (30) d'écoulement radial sortant et pour diviser l'écoulement de liquide de refroidissement dans ledit premier passage (30) d'écoulement radial sortant ; **caractérisé en ce que** ledit premier desdits passages (30) d'écoulement radial sortant comprend en outre un déflecteur (58) dans une partie de pointe radialement la plus à l'extérieur dudit premier passage (30) d'écoulement radial sortant en amont d'un premier desdits passages (32) d'écoulement radial entrant et à un endroit situé entre le segment (56) de nervure le plus éloigné dudit passage (26) d'entrée de liquide de refroidissement et le bord (15) de fuite pour ainsi diviser à nouveau l'écoulement de liquide de refroidissement dans la partie de pointe radialement à l'extérieur entre lesdits passages (30, 32) d'écoulement radial entrant et sortant et pour diriger l'écoulement de liquide de refroidissement dans une région d'angle de pointe dudit bord (15) de fuite, avant qu'il ne s'écoule dans ledit premier desdits passages (32) d'écoulement radial entrant, ledit déflecteur (58) s'étendant entre lesdits côtés (17, 19) de pression et d'aspiration et étant relié à ceux-ci.

2. Aube de turbine à gaz selon la revendication 1 dans laquelle le circuit de refroidissement interne comprend des nervures (52, 54) de turbulateur dans chaque passage parmi ladite pluralité de passages (30, 34, 38) d'écoulement radial sortant et de passages (32, 36, 40) d'écoulement radial entrant.

3. Aube de turbine à gaz selon la revendication 2 dans laquelle lesdites nervures (52) de turbulateur s'étendent à angle aigu par rapport à la direction d'écoulement de liquide de refroidissement dans tous les passages (30, 32, 34, 36, 38, 40) d'écoulement radial sortant et entrant, sauf un.

4. Aube de turbine à gaz selon la revendication 3, dans laquelle un passage parmi lesdits passages (30, 34, 38) d'écoulement radial sortant et lesdits passages (32, 36, 40) d'écoulement radial entrant comprend un passage d'écoulement radial entrant le long dudit bord (13) d'attaque.

5. Aube de turbine à gaz selon les revendications 2, 3 ou 4 dans laquelle les nervures (54) de turbulateur dans ledit passage (40) d'écoulement radial le long dudit bord (13) d'attaque s'étendent de manière sensiblement perpendiculaire à ladite direction d'écoulement de liquide de refroidissement.

6. Aube de turbine à gaz selon les revendications 2, 3 ou 4 dans laquelle les nervures (52, 54) de turbulateur s'étendent à partir de l'un desdits côtés (17, 19) de pression et d'aspiration et s'étendent seulement en partie dans les passages (30, 32, 34, 36, 38, 40) d'écoulement radial sortant et entrant correspondants.
